# EUROPÄISCHE PATENTANMELDUNG

(11) **EP 4 432 384 A2**
(43) Veröffentlichungstag der Anmeldung: **18.09.2024**
(21) Anmeldenummer: 24158757.5
(22) Anmeldetag: 21.02.2024
(51) Int. Cl.: H01M 4/04, H01M 10/04, H01M 10/0566, H01M 10/0585, H01M 10/0587, H01M 50/406, H01M 50/46, H01M 50/491

(54) **VERFAHREN ZUR FERTIGUNG EINER BATTERIEZELLE**

(30) Priorität: 16.03.2023 DE 102023202407
(71) Anmelder: VOLKSWAGEN AG, 38440 Wolfsburg (DE)
(72) Erfinder: Jamadar, Kartik, 38442 Wolfsburg (DE)

(57) **Zusammenfassung**

Die Erfindung betriff ein Verfahren zur Fertigung einer Batteriezelle mit einer im Zellgehäuse angeordneten Elektroden-/Separator-Anordnung mit zumindest einem Separator, einer Anode und einer Kathode, die mit Elektrolyt (E) benetzt sind, mit einem Stapel- oder Wickelprozess, in dem der Separator, die Anode und die Kathode zur Elektroden-/Separatoranordnung zusammengelegt werden. Erfindungsgemäß werden der Separator, die Anode und/oder die Kathode in einem Benetzungsprozess bereits vor dem Stapel- oder Wickelprozess mit dem Elektrolyt (E) benetzt.

## Beschreibung

Die Erfindung betrifft ein Verfahren zur Fertigung einer Batteriezelle nach dem Oberbegriff des Anspruches 1 sowie eine Prozessanordnung zur Durchführung eines solchen Verfahrens nach Anspruch 8.

Die zu fertigende Batteriezelle weist ein Zellgehäuse auf, in dem eine Elektroden-/Separator-Anordnung eingehaust ist, die mit einem flüssigen Elektrolyt benetzt ist. Die Elektroden weisen eine Ableiterfolie auf, die ein- oder beidseitig mit einer Aktivmaterialschicht beschichtet ist.

Die Batteriezelle wird in folgender Prozessabfolge gefertigt: Zunächst wird in einem Beschichtungsprozess eine Ableiterfolien-Endlosbahn mit einer zähflüssigen Ausgangskomponente eines Elektroden-Aktivmaterials beschichtet, und zwar unter Bildung einer Elektroden-Endlosbahn. Anschließend folgt ein Trockenprozess, in dem die Elektroden-Endlosbahn getrocknet wird. Danach folgt ein Kalandrierprozess, in dem die auf der Ableiterfolien-Endlosbahn beschichtete Aktivmaterial-Schicht auf eine vordefinierte Schichtdicke verdichtet wird. In einem anschließenden Schneidprozess wird die Elektroden-Endlosbahn zu Elektroden abgelängt sowie zugeschnitten und wird ein Stapel- oder Wickelprozess durchgeführt, um eine Elektroden-/Separator-Anordnung zu bilden. Diese wird in das Zellgehäuse eingehaust. Anschließend folgt eine Elektrolyt-Befüllung, in der ein Elektrolyt in das Zellgehäuse gefüllt wird. Nach dem Zusammenbau der Batteriezelle erfolgt eine Formation/Aging, in der erste Lade-/Entladevorgänge der Batteriezelle stattfinden.

Bei einem solchen aus dem Stand der Technik bekannten Prozess ergeben sich die folgenden Probleme: Gemäß einem ersten Problem ist die Benetzung des Separators ist ein zeitintensiver Prozess. Der Separator muss gründlich vom Elektrolyt benetzt werden, damit sich die Lithiumionen bewegen können. Die Benetzung ist ein zeitabhängiger Prozess. Um die Benetzung zu beschleunigen, kann mechanischer Druck und Wärme angewendet werden. Dies kann jedoch den Separator beschädigen.

Mit zunehmender Zellgröße und größerem Separator kann eine vollständige Benetzung nach der Elektrolyt-Befüllung einen Tag oder länger andauern. Es gibt kein Verfahren zur Überprüfung der Benetzung des Separators. Das bedeutet, dass die Kapazität der Zelle beeinträchtigt wird, wenn die Benetzung nicht vollständig erfolgt.

Gemäß einem zweiten Problem ist auch die Benetzung der Elektroden ein zeitraubender Prozess. Kathode und Anode werden beim Kalandrieren stark verdichtet. Dadurch wird die Porengröße reduziert. Das bedeutet, je dichter die Elektrode ist, desto schwieriger ist es für den Elektrolyt, einzudringen. Wenn der Elektrolyt nicht in die Poren der Elektrode eindringt, können auch keine Lithium-Ionen in die Poren der Elektrode gelangen. Um die Benetzung der Elektrode zu erhöhen, kann mechanischer Druck auf die Elektroden-/Separator-Anordnung ausgeübt werden, was zu Rissen im Separator führen kann. Sowohl die Blockierung großer Poren als auch die Verringerung des gesamten Porenvolumens in hohem Maße führt zu einer geringen Menge an Elektrolyt/Partikel-Grenzflächen, die für den Lithium-Ionen-Transfer zur Verfügung stehen. Die Verringerung der Grenzflächen zwischen Elektrolyt und Partikeln kann die Elektrolytbenetzung beeinträchtigen. Dies trägt ebenfalls zu einer Verschlechterung der elektrochemischen Leistung bei.

Aus der DE 10 2021 130 558 A1 ist eine lithiumhaltige Elektrode mit Keramikteilchen bekannt. Die Keramikteilchen grenzen als keramische Schicht an eine erste Oberfläche der Lithiummetall-Elektrode an. Aus der EP 3 486 985 A1 ist ein Verfahren zur Herstellung einer Batteriezelle bekannt. Das Verfahren umfasst das Bereitstellen einer Elektroden-/Separator-Anordnung. Der Separator ist durchlässig für einen in einem Lösungsmittel gelösten Elektrolyt. Das Verfahren umfasst ferner das Benetzen der Anordnung in einem Elektrolytbad, wobei das Elektrolytbad den in dem Lösungsmittel gelösten Elektrolyten enthält.

Die Aufgabe der Erfindung besteht darin, ein Verfahren sowie eine Prozessanordnung zur Fertigung einer Batteriezelle bereitzustellen, mittels der die Prozessdauer zur Fertigung der Batteriezelle im Vergleich zum Stand der Technik reduziert ist.

Die Aufgabe ist durch die Merkmale des Anspruches 1 oder 8 gelöst. Bevorzugte Weiterbildung der Erfindung sind in den Unteransprüchen offenbart.

Die Erfindung geht von einem Verfahren zur Fertigung einer Batteriezelle mit einer im Zellgehäuse angeordneten Elektroden-/Separator-Anordnung aus, die zumindest einen Separator, eine Anode und eine Kathode aufweist, die mit Elektrolyt benetzt sind. In dem Verfahren erfolgt unter anderem ein Stapel- oder Wickelprozess, in dem der Separator, die Anode und die Kathode zur Elektroden-/Separator-Anordnung zusammengelegt werden. Gemäß dem kennzeichnenden Teil des Anspruches 1 werden der Separator, die Anode und/oder die Kathode in einem Benetzungsprozess bereits vor Durchführung des Stapel- oder Wickelprozesses mit dem Elektrolyt benetzt. Auf diese Weise kann gegebenenfalls auf eine Elektrolyt-Befüllung teilweise oder vollständig verzichtet werden, die im Stand der Technik nach der Einhausung des Elektroden-/Separator-Stapels in das Zellgehäuse erfolgt. Eine solche Elektrolyt-Befüllung ist mit einer längeren Benetzungszeitdauer verbunden, die erforderlich ist, damit der Elektrolyt den Separator, die Anode und/oder die Kathode vollständig benetzt. Erfindungsgemäß kann eine solche Benetzungszeitdauer zumindest reduziert werden oder komplett wegfallen.

Der Separator, die Anode und/oder die Kathode werden im Rahmen einer Serienfertigung jeweils als Endlosbahn bereitgestellt. Diese wird im Benetzungsprozess durch ein Elektrolytbad geführt.

Folgende Änderungen im Herstellungsprozess können vorgenommen werden, um die oben beschriebenen Probleme zu lösen:
Erfindungsgemäß kann der Separator wird durch ein Elektrolytbad geführt werden, in dem der Separator vom Elektrolyt benetzt wird. Außerdem wird mechanischer Druck ausgeübt, um den Elektrolyt in den Separator zu drücken. Dieser Benetzungsprozess erfolgt vor dem Stapelprozess.

In gleicher Weise kann auch die Elektrode vor dem Stapel -oder Wickelvorgang durch ein Elektrolytbad geführt werden. Die Elektroden werden nach dem Durchlaufen des Elektrolytbades vor dem Stapelvorgang gepresst. Auf diese Weise wird eine mechanische Kraft auf die Elektrode ausgeübt, um sie besser zu benetzen. Die mechanische Kraft wird daher erfindungsgemäß nicht auf die Elektroden/Separator-Anordnung, sondern direkt auf die Elektroden ausgeübt. Diese Vorgehensweise ist effektiver und weniger anfällig für Risse im Separator innerhalb der Elektroden/Separator-Anordnung.

Der zähflüssige Ausgangskomponente des Kathodenaktivmaterials können Ethylenkarbonatpartikel beigemischt werden. Dazu wird die zähflüssige Ausgangskomponente des Kathodenaktivmaterials nach dem Trocknen auf Raumtemperatur oder auf -7°C abgekühlt. Auf diese Weise kristallisiert das Ethylencarbonat und verteilt es sich im Kathodenaktivmaterial.

Das bedeutet, dass der Elektrolyt in der zähflüssige Ausgangskomponente des Kathodenaktivmaterials in Form von festen Kristallen vorliegt, die sich schließlich während des Aging-Prozesses bei hohen Temperaturen in den flüssigen Elektrolyt umwandeln. Auf diese Weise wird die Kathode in allen Poren von Ethylencarbonat benetzt. Ethylencarbonat weist einen Schmelzpunkt von etwa 30°C auf. Bis -7°C liegt das Ethylencarbonat als eine gelartige Struktur vor. Unterhalb dieser Temperatur ergibt sich eine vollständig feste Phase. Ethylencarbonat ist einer der wichtigsten Bestandteile des Elektrolyts.

Gegebenenfalls kann das Ethylencarbonat während der Trocknungsphase der Elektrode (d.h. nach einer Nassbeschichtung) verdampfen. In diesem Fall kann die Kathode mit einer PVDF-Beschichtung bedeckt werden, in die Ethylencarbonatpartikel eingebettet sind. Diese Beschichtung erfolgt nach dem Benetzungsprozess im Elektrolytbad. Dies hat zwei Vorteile: Die zusätzliche PVDF-Beschichtung sorgt für eine Klebefunktion zwischen Separator und Kathode. Zudem tropft der Elektrolyt nicht aus den Poren im Inneren der Kathode. Wenn die Kathode in einem Trockenbeschichtungsprozess hergestellt wird, kann Ethylencarbonat direkt im aktiven Materialpulver verwendet werden. Das bedeutet auch, dass der Separator keine PVDF-Beschichtung hat, was ihn billiger macht.

Die Anode kann zusätzlich mit Hartkohle beschichtet werden, in die Aluminiumoxidkristalle eingebettet sind. Hartkohlenstoff kann aufgrund seiner zufällig verteilten Poren den Benetzungsprozess unterstützen. Das Aluminiumoxid schützt vor Dendritenwachstum. Das bedeutet, dass der Separator nicht unbedingt eine Aluminiumoxidbeschichtung haben muss, was den Separator billiger macht.

Die erfindungsgemäßen Aspekte können wie folgt zusammengefasst werden: Der Separator ist vor dem Wickel- oder Stapelprozess mit Elektrolyt benetzbar. Die Aktivmaterialschicht der Kathode kann Ethylencarbonatpartikel enthalten und/oder mit einer PVDF-Schicht bedeckt sein, in die Ethylencarbonatpulver eingebettet sein kann. Die Kathodenbeschichtung kann bei zum Beispiel -7°C erfolgen, damit das Ethylencarbonat in der PVDF-Schicht in fester Phase verbleibt. Diese PVDF-Beschichtung kann vor dem Benetzungsprozess im Elektrolytbad erfolgen. Der Benetzungsprozess wird bei Raumtemperatur durchgeführt, damit die Ethylencarbonatpartikel im PVDF während des Stapelprozesses nicht schmelzen. Sie schmelzen nur während des Aging-Prozesses bei hohen Temperaturen. Bei einer Trockenbeschichtung wird das Kathodenaktivmaterial mit einem festen Ethylencarbonat-Pulver beschichtet. Die PVDF-Beschichtung ist in diesem Fall optional.

Die Anode kann mit einer harten Kohlenstoffschicht überzogen sein, in die Aluminiumoxidpartikel eingebettet sind. Diese Beschichtung wird als zusätzliche Schicht nach der herkömmlichen Nassbeschichtung der Anode aufgebracht. Sowohl die Kathode als auch die Anode können vor dem Stapel- oder Wickelvorgang im Elektrolytbad mit Elektrolyt benetzt werden. Der Separator, die Kathode und die Anode werden nach dem Benetzungsprozess mittels einer Walzenanordnung mechanisch unter Druck gesetzt, damit der Elektrolyt vollständig in alle Poren eindringt. Der Separator muss nicht unbedingt eine PVDF-Beschichtung haben, damit er an der Kathode haften kann. Die Elektrolytbeschichtung wirkt bei der Benetzung wie ein Klebstoff. Außerdem befindet sich die PVDF-Beschichtung jetzt auf der Kathode.

Das Hauptziel besteht also darin, dass die Separatoren und Elektroden bereits vor dem Wickel- und Stapelprozess mit Elektrolyt benetzt werden. Es ist daher nicht mehr notwendig, mechanischen Druck auf die Elektroden-/Separator-Anordnung auszuüben. Es kann außerdem auf eine zusätzliche Lagerzeit der Batteriezelle verzichtet werden. Eine solche Lagerzeit ist im Stand der Technik erforderlich, um nach der Elektrolyt-Befüllung eine komplette Elektrolyt-Benetzung zu erzielen. Erfindungsgemäß kann daher unmittelbar nach dem Zusammenbau der Batteriezelle ohne Lagerzeit der Formations-/Agingprozess gestartet werden. Die aus dem Stand der Technik bekannte Elektrolyt-Befüllung ist optional, da der Elektrolyt bereits vor dem Stapelprozess den Separator und die Elektrode benetzt bzw. durchtränkt.

Beispielhaft durchläuft der Separator ein Elektrolytbad, das eine flüssige Lösung ist, die EC und DMC enthält. Zudem kann das Elektrolytbad Lithiumsalz enthalten, das nicht empfindlich auf Raumbedingungen, insbesondere Feuchtigkeit, reagiert, wie etwa LiFSi. Es ist auch möglich, nur das Lösungsmittel sowie Ethylencarbonat (EC) / Dimethylencarbonat (DMC)/ Ethylenmethylencarbonat (EMC) ohne Lithiumsalze zu verwenden. In diesem Fall können die Lithiumsalze in einem Elektrolyt-Injektionsverfahren nach dem Stapeln hinzugefügt werden.

Der Elektrolyt kann während des Benetzungsprozesses in die Poren des Separators eintreten. Spezielle Benetzungswalzen helfen dabei, die Flüssigkeit in die Poren einzuleiten. Das Elektrolytbad kann eine Temperatur von 50°C bis 70°C aufweisen, um eine schnellere Benetzung zu erreichen. Diese Temperatur hat keinen Einfluss auf die Eigenschaften des Separators. Überschüssige Flüssigkeit kann durch Abstreiferwalzen entfernt werden. Der mit Elektrolyt und (oder ohne) mit Lithiumsalz gefüllte Poren gefüllte Separator wird anschließend zum Stapel- oder Wickelvorgang transportiert.

Es ist möglich, den Separator vor dem Stapelvorgang mit einer PVDF-Beschichtung zu versehen, damit der Elektrolyt nicht vom Separator tropft. Außerdem bewirkt die PVDF-Beschichtung eine bessere Haftung an der Elektrode. In diesem Fall ist keine PVDF-Beschichtung auf der Kathode erforderlich. Die PVDF-Beschichtung des Separators vor dem Stapeln oder Wickeln ist lediglich eine Option.

Die im Elektrolytbad verbauten Benetzungswalzen können aus Titan bestehen und sind mit einer speziellen Oberflächenstruktur versehen. Diese erzeugt Mikrovertiefungen auf der Separator- oder Elektroden-Oberfläche, so dass die Separator- oder Elektroden-Oberfläche mehr Flüssigkeit aufnehmen kann. Die Benetzungswalzen können mit piezoelektrischen Wandlern verbunden werden. Diese wandeln elektrische Signale in mechanische Schwingungen um. Die Walzen können daher in radialer Richtung mit etwa 5 kHz mechanischer Schwingung beaufschlagt werden. Die Walzen vibrieren mit einer Amplitude von etwa 10-15 µm. Durch diese Vibration kann die Flüssigkeit tief in die Poren des Separators bzw. der Elektrode eindringen. Die Benetzungswalzen sind nicht zum Kalandrieren gedacht; jedoch üben eine Druckkraft aus, damit Flüssigkeit in die Poren eindringen kann. Das bedeutet, dass die Benetzungswalzen zwei Hauptfunktionen haben: Erstens erzeugen sie eine Mikrostrukturvertiefung auf der Elektrode bzw. dem Separator, um mehr Flüssigkeit auf der Oberfläche zu halten. Dies hilft, den Separator mit der Elektrodenoberfläche zu verkleben. Zweitens kann der mechanische Druck durch die Kompressionskraft und die Vibration der Benetzungswalzen dazu beitragen, dass die Flüssigkeit in die Poren des Separators gelangt. Direkt über den Benetzungswalzen befinden sich die Abstreiferwalzen aus Gummi. Sie entfernen den überschüssigen Elektrolyt von der Oberfläche. Die Abstreiferwalzen können ebenfalls mittels Piezowandler unter Vibration gesetzt werden. Hier können Amplitude und Frequenz der Vibration geringer sein als bei den Benetzungswalzen, da die Hauptfunktion dieser Walzen darin besteht, überschüssige Flüssigkeit von der Oberfläche des Separators zu entfernen. Wenn die Walzen und der Separator vibrieren, läuft der überschüssige Elektrolyt von den Walzen und dem Separator bzw. der Elektrode zurück in das Elektrolytbad. Es wird nur die Flüssigkeit entfernt, die nicht in die Poren des Separators eingedrungen ist und nicht fest an der Oberfläche des Separators anhaftet. Diese Gummiwalze ist optional. Sie ist nur dann notwendig, wenn Flüssigkeit aus dem Separator austritt und den Bereich zwischen Tank und nächstem Beschichtungsvorgang benetzt.

Alternativ oder zusätzlich kann auch der Prozess zur Fertigung der Kathode angepasst werden, um eine beschleunigte Elektrolyt-Durchtränkung zu erzielen: So kann der zähflüssigen Ausgangskomponente des Kathodenaktivmaterials PVDF als Bindemittel beigemischt werden, außerdem CNT (Kohlenstoff-Nanoröhrchen) für die Leitfähigkeit sowie NMP als Lösungsmittel und Ethylencarbonat-Partikel. Der gesamte Prozess wird bevorzugt unterhalb der Erstarrungstemperatur von EC durchgeführt, d. h. bei etwa -7°C. Nach dem Mischen wird die zähflüssige Ausgangskomponente des Kathodenaktivmaterials auf eine Ableiterfolie (d.h. ein Aluminiumsubstrat) aufgetragen, um eine Kathode zu bilden. Diese nasse Elektrode wird bei ca. 120°C getrocknet, was zum Schmelzen des EC führt, das sich in den Poren des Kathodenaktivmaterials sammelt. Nach dem Trocknen wird die Kathode wieder auf zum Beispiel -10°C abgekühlt, um die EC-Partikel erneut zu kristallisieren. Die Kathode wird dann bei Raumtemperatur durch ein Elektrolytbad geleitet, in dem die EG in den Poren der Kathode in fester Phase verbleibt. Im Elektrolyt-Benetzungsprozess wird die Kathode durch einen Walzendruck gepresst, so dass der Elektrolyt in die Poren der Kathode gelangt.

Die Kathode kann mit einer PVDF-Schicht überzogen sein. Die PVDF-Schicht wird im Trockenverfahren aufgebracht, indem die Kathode zwischen Walzen und PVDF-Partikeln hindurchgeführt wird. Die PVDF-Schicht dient auch als Schutzmedium für die Kathode und als Klebstoff zum Aufkleben des Separators. Die Kathode ist in benetztem Zustand mit benetztem Separator und benetzter Anode gestapelt. Das EC wird während des Aging-Prozesses bei hoher Temperatur wieder aufgeschmolzen und sammelt sich in den Poren der Kathode.

Es gibt verschiedene Beschichtungstechniken, um eine durchgehende PVDF-Schicht auf die Kathodenbeschichtung aufzubringen. Beispielhaft kann eine Trockenbeschichtung durchgeführt werden, bei der PVDF mit einer Kalanderwalze auf die Kathodenoberfläche aufgetragen wird. Um eine bessere Haftung zu erreichen, kann die PVDF-Beschichtung optional aufgeschmolzen und dann abgekühlt werden. Für die Trockenbeschichtung kann auch das Rotationssprühverfahren verwendet werden, bei dem PVDF-Pulver mit Hilfe der Zentrifugalkraft bei hoher Temperatur (bis maximal 100°C) und Geschwindigkeit auf die Kathodenelektrode gesprüht wird.

Alternativ oder zusätzlich kann auch der Prozess zur Fertigung der Anode angepasst werden, um eine beschleunigte Elektrolyt-Durchtränkung zu erzielen: So kann die Anode mit einer dünnen Schicht aus Hartkohlenstoff beschichtet werden, die mit Aluminiumoxid als Teil der zweiten Schicht auf beiden Oberflächen der Anode eingebettet ist. Die erste Schicht kann aus Graphit mit Bindemittel und leitfähigem Kohlenstoff bestehen. Die Anode wird dann nach dem gleichen Verfahren wie die Kathode bzw. der Separator in einem Benetzungsprozess benetzt.

Nachfolgend sind die wesentlichen Unterschiede der Erfindung gegenüber dem Stand der Technik nochmals zusammengefasst: So wird der Separator vor dem Wickel- oder Stapelprozess mit Elektrolyt benetzt. Der Ausgangskomponente des Kathodenaktivmaterials kann Ethylencarbonatpartikel beigemischt werden. Alternativ oder zusätzlich kann die Aktivmaterialschicht der Kathode mit einer PVDF-Schicht bedeckt sein, in die Ethylencarbonatpulver eingebettet ist. Die Kathodenbeschichtung erfolgt bei -7°C, damit das Ethylencarbonat in der PVDF-Schicht in fester Phase verbleibt. Diese PVDF-Beschichtung kann vor dem im Elektrolytbad stattfindenden Benetzungsprozess erfolgen. Der Benetzungsprozess wird bei Raumtemperatur durchgeführt, damit die Ethylencarbonatpartikel im PVDF während des Stapelprozesses nicht schmelzen. Sie schmelzen nur während des Aging-Prozesses bei hohen Temperaturen (ca. 60°C). Bei der Trockenbeschichtung wird das Aktivmaterial mit einem festen Ethylencarbonat-Pulver beschichtet. Die PVDF-Beschichtung ist in diesem Fall optional.

Die Vorteile der Erfindung sind nachfolgend zusammengefasst: Es erfolgt eine schnellere Benetzung von Elektrode und Separator, da die benetzte Elektrode und der Separator vor dem Stapelprozess erfolgt. Der Separator braucht keine PVDF-Beschichtung und auch kein Aluminiumoxid. Das macht den Separator billiger. Die PVDF-Beschichtung wird vielmehr auf die Außenfläche der Kathode übertragen, während die Aluminiumoxid-Beschichtung auf die Anode übertragen wird. Die Infrastruktur und die Kosten, die erforderlich sind, um die Zelle nach der aus dem Stand der Technik bekannten Elektrolyt-Befüllung für eine gründliche Benetzung ruhen zu lassen, werden reduziert. Derzeit dauert die Benetzung zwischen 12 Stunden und einem Tag. Die PVDF-Beschichtung auf der Kathode trägt dazu bei, dass der Separator gleichmäßig mit der Kathode verklebt und somit die Lufteinschlüsse zwischen Kathode und Separator reduziert werden. Die Befeuchtung der Elektrode und des Separators erfolgt auf der Ebene der Elektrode und des Separators und nicht auf Ebene der Elektroden-/Separator-Anordnung. Daher kann man die mechanische Kraft und die Temperatur auf der Separator-/Elektrodenebene kontrollieren, ohne die Elektroden-/Separator-Anordnung zu beschädigen. Die Anode weist eine Hartkohlenstoffschicht auf, in die Aluminiumoxidpartikel eingebettet sind. Dies ermöglicht eine schnellere Lithiumeinlagerung, eine schnellere Benetzung und einen besseren Schutz gegen Dendriten. Zudem ergibt sich eine hohe Porosität in der Kathode durch absichtliche Erzeugung durch Schmelzen des in dem Kathodenaktivmaterial eingebetteten Ethylenkarbonats während des Aging-Prozesses.

Nachfolgend sind Ausführungsbeispiele der Erfindung anhand der beigefügten Figuren beschrieben. Es zeigen:

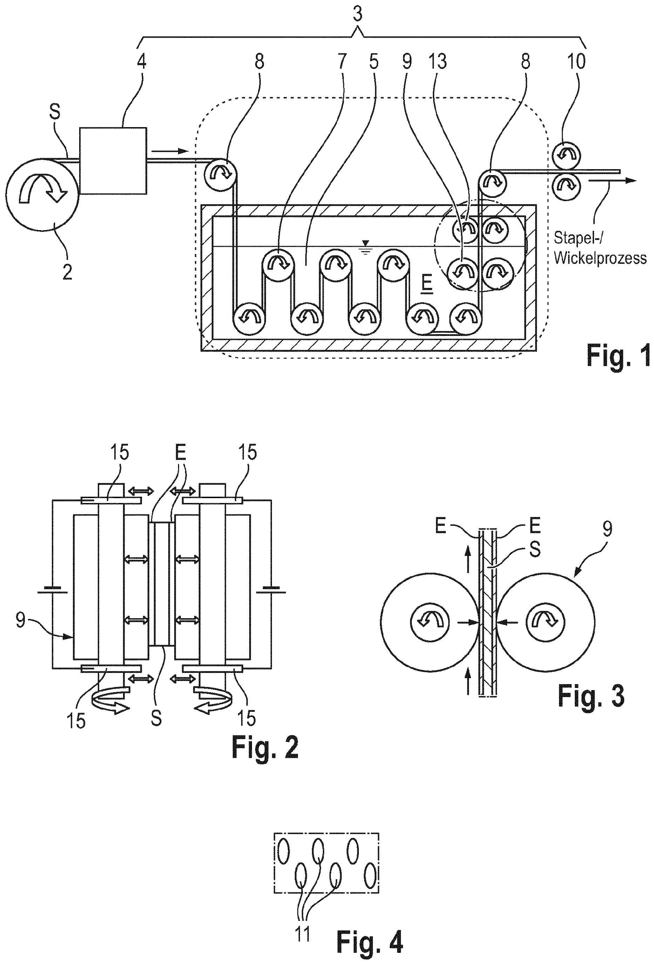

- Figuren 1 bis 11: unterschiedliche Darstellungen, anhand derer Maßnahmen für eine beschleunigte Elektrolyt-Benetzung des Separators, der Anode und/oder der Kathode veranschaulicht sind.

Die in den Figuren angedeuteten Prozessschritte sind in einem Verfahren zur Fertigung einer Batteriezelle eingebunden. Die Batteriezelle weist im fertiggestellten Zustand einer Zellgehäuse auf, in dem eine Elektroden-/Separator-Anordnung eingehaust ist, die mit einem flüssigen Elektrolyt E durchtränkt ist beziehungsweise von diesem benetzt ist. Die darin verbauten Elektroden sind jeweils aus einer Ableiterfolie aufgebaut, die ein- oder beidseitig mit einer Elektroden-Aktivmaterialschicht 23, 45 beschichtet sind.

Im Hinblick auf ein einfacheres Verständnis der Erfindung wird zunächst eine herkömmliche Prozessabfolge zur Serienfertigung der Batteriezelle beschrieben, die den Ausgangspunkt der Erfindung bildet: Demnach wird zur Herstellung der Anode beziehungsweise der Kathode jeweils zunächst eine Ableiterfolien-Endlosbahn 22 bereitgestellt. In einem Beschichtungsprozess wird die jeweilige Ableiterfolien-Endlosbahn 22 mit einer zähflüssigen Ausgangskomponente eines Elektroden-Aktivmaterials beschichtet, und zwar unter Bildung einer Elektroden-Endlosbahn A, K. Anschließend folgt ein Trockenprozess zum Trocknen der Aktivmaterialschichten 23, 45. Danach wird ein Kalandrierprozess durchgeführt, in dem die Aktivmaterialschichten 23, 45 der Elektroden-Endlosbahnen A, K bis zu einer vordefinierten Schichtdicke verdichtet werden. In einem folgenden Schneidprozess wird die Elektroden-Endlosbahn A, K zur Elektrode (das heißt zur Anode oder Kathode) sowie eine Separator-Endlosbahn S zum Separator abgelängt und/oder zugeschnitten. Im Anschluss daran startet ein Wickel- oder Stapelprozess, in dem die Kathoden, Anoden und Separatoren zu der Elektroden-/Separator-Anordnung zusammengelegt werden. Diese wird in das Zellgehäuse eingehaust. Danach findet eine Elektrolyt-Befüllung statt, in der der Elektrolyt E in das Zellgehäuse gefüllt wird. Nach dem Zusammenbau wird die Batteriezelle über eine Benetzungszeitdauer solange gelagert, bis die eingehauste Elektroden-/Separator-Anordnung vollständig mit dem Elektrolyt E benetzt ist. Nach Abschluss dieser Benetzungszeitdauer startet eine Formation/Aging, in der erste Lade-/Entladevorgänge der Batteriezelle erfolgen.

In Abkehr von diesem bekannten Fertigungsverfahren weist das erfindungsgemäße Verfahren einen Benetzungsprozess auf, in dem die Separator-Endlosbahn S, die Anoden-Endlosbahn S und/oder die Kathoden-Endlosbahn K bereits vor dem Stapel- oder Wickelprozess mit dem Elektrolyt E benetzt werden. Auf diese Weise kann die (nach einer Elektrolyt-Befüllung in das Zellgehäuse beginnende) Benetzungszeitdauer bis zur vollständigen Elektrolyt-Benetzung des Separators, der Anode und/oder der Kathode zumindest reduziert werden oder vollständig wegfallen.

Der Prozess zur Fertigung des Separators ist im Hinblick auf eine beschleunigte Elektrolyt-Benetzung wie folgt angepasst: Gemäß der Figur 1 wird die Separator-Endlosbahn S auf einer Separator-Wickelrolle 2 zunächst einer Separator-Benetzungsstation 3 zugeführt. Die Separator-Benetzungsstation 3 weist ein Elektrolytbad 5 auf, in dem die Separator-Endlosbahn S über eine Umlenkrollen-Anordnung 7 mäanderförmig geführt wird. Stromab der Umlenkrollen-Anordnung 7 folgt ein Benetzungswalzenpaar 9, durch dessen Walzenspalt die Separator-Endlosbahn S läuft. Das Benetzungswalzenpaar 9 übt im Walzenspalt einen mechanischen Druck auf die Separator-Endlosbahn S aus, um einen Elektrolyt-Eintritt in die Poren der Separator-Endlosbahn S zu unterstützen. Zudem weisen die Walzen des Benetzungswalzenpaars 9 am Außenumfang jeweils eine Oberflächenstruktur 11 (Figur 4) auf, mittels der Mikrovertiefungen in der Separator-Endlosbahn S erzeugbar sind, um eine Elektrolyt-Aufnahme zu steigern. In Fertigungsrichtung stromab des Benetzungswalzenpaars 9 ist ein Abstreiferwalzenpaar 13 bereitgestellt, das oberhalb des Elektrolyt-Pegels im Elektrolytbad 5 angeordnet ist. Die Separator-Endlosbahn S läuft durch den Walzenspalt des Abstreiferwalzenpaars 13 in Richtung Ausgang des Elektrolytbads 5. Auf diese Weise wird überschüssiger Elektrolyt E von der Separator-Endlosbahn S abgestreift und läuft dieser unter Schwerkraftwirkung in das Elektrolytbad 5 zurück. Am Ausgang des Elektrolytbads 5 wird die Separator-Endlosbahn S durch einen Walzenspalt eines Transferrollenpaars 10 in Richtung Stapel- oder Wickelprozess geführt.

Wie aus der Figur 2 hervorgeht, können die Walzen des Benetzungswalzenpaars 9 mithilfe von Piezowandlern 15 in Vibration versetzt werden. Die Vibration der Walzen ist derart eingestellt, dass eine Elektrolyt-Aufnahme in die Separator-Endlosbahn S unterstützt wird. In gleicher Weise können auch die Walzen des Abstreiferwalzenpaars 13 in Vibrationen versetzt werden, um ein Elektrolyt-Abstreifen von der Separator-Endlosbahn S zu unterstützen. In der Figur 1 liegt die Badtemperatur während des Benetzungsprozesses bei etwa 50°C bis 70°C.

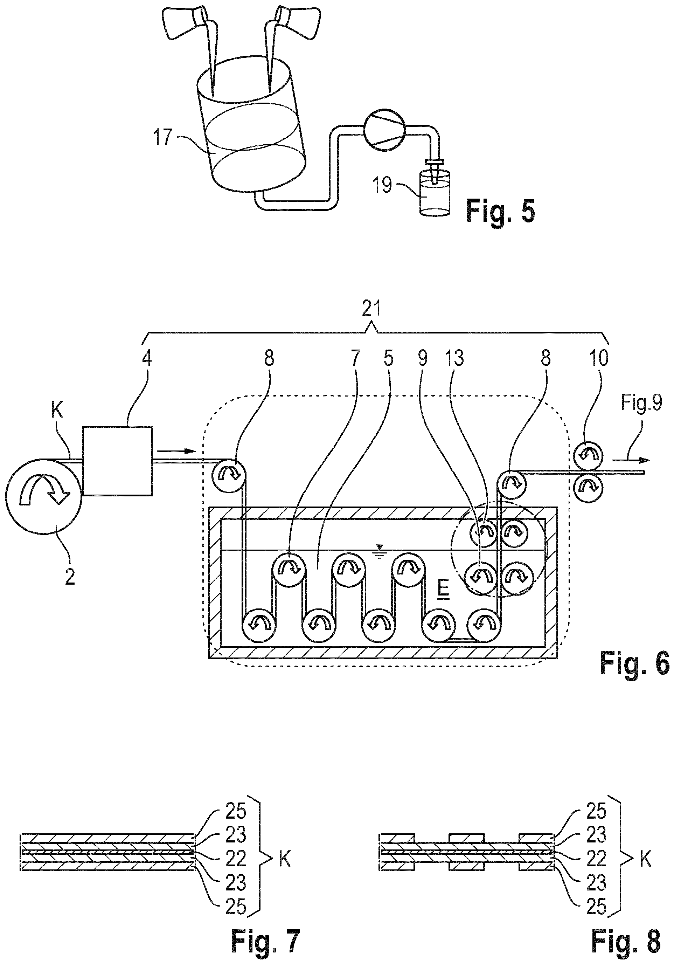

Der Prozess zur Fertigung der Kathode ist im Hinblick auf eine beschleunigte Elektrolyt-Benetzung wie folgt angepasst: So ist in der Figur 5 grob schematisch eine Mischeinheit 17 gezeigt, in der die zähflüssige Ausgangskomponente des Kathoden-Aktivmaterials hergestellt wird. In der zähflüssigen Ausgangskomponente sind beispielhaft zu 90 w% NMC, zu 5 w% CNT, zu 4 w% PVDF als Binder sowie NMP als Lösungsmittel enthalten. Erfindungsgemäß sind der Materialmischung zusätzlich Ethylencarbonat-Feststoffpartikel zu etwa 1 w% beigemischt.

In der Figur 5 wird diese Materialmischung von der Mischeinheit 17 über eine Pumpe zu einem Aktivmaterial-Reservoir 19 geleitet. Von dort wird die zähflüssige Ausgangskomponente des Kathodenaktivmaterials im Beschichtungsprozess auf eine Ableiterfolien-Endlosbahn 22 beschichtet.

Die Mischung, die Bereitstellung sowie der Prozess zur Beschichtung der zähflüssigen Ausgangskomponente des Kathodenaktivmaterials erfolgt bei einer Prozesstemperatur von ca. -7°C, das heißt unterhalb des Erstarrungspunkts von Ethylencarbonat.

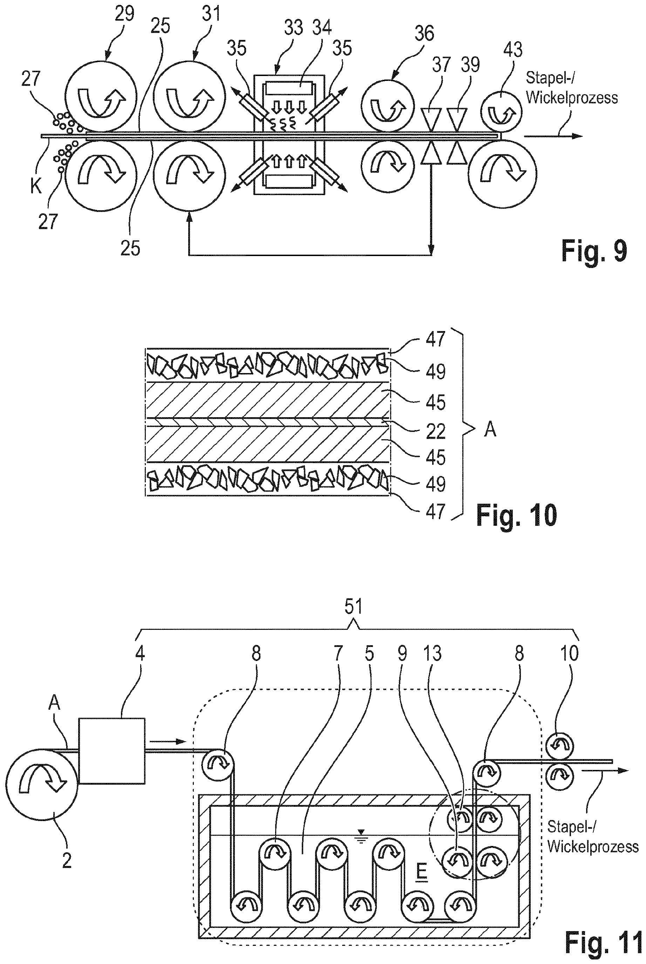

Die so hergestellte Kathoden-Endlosbahn K wird einem Trockenprozess unterworfen, in dem sich die Kathoden-Endlosbahn K bis auf etwa 120°C erwärmt, wodurch die Ethylencarbonat-Feststoffpartikel aufschmelzen. Nach dem Trockenvorgang wird die Kathoden-Endlosbahn K abermals auf eine Prozesstemperatur (ca. -10°C) unterhalb des Erstarrungspunktes von Ethylencarbonat abgekühlt. Danach folgt der Kalandrierprozess, in dem die Kathodenaktivmaterialschicht 23 auf eine vordefinierte Schichtdicke verdichtet wird. Im weiteren Prozessverlauf wird die Kathoden-Endlosbahn Keiner Kathoden-Benetzungsstation 21 (Figur 6) zugeführt, die identisch wie die Separator-Benetzungsstation 3 (Figur 1) aufgebaut ist, so dass auf deren Vorbeschreibung verwiesen wird. Im Unterschied zur Separator-Benetzungsstation 3 liegt die Prozesstemperatur im Benetzungsprozess der Kathoden-Endlosbahn K (Figur 6) unterhalb des Schmelzpunkts von Ethylencarbonat, zum Beispiel bei Raumtemperatur oder bei 0°C. Am Ausgang des Elektrolytbads 5 wird die Kathoden-Endlosbahn K durch den Walzenspalt des Transferrollenpaars 10 zu einer PVDF-Beschichtung (Figur 9) geführt.

In der PVDF-Beschichtung (Figur 9) wird die Aktivmaterialschicht 23 der Kathoden-Endlosbahn K mit einer PVDF-Schicht 25 (Figuren 7 oder 8) überzogen. Die PVDF-Schicht 25 wirkt sowohl als Schutzschicht als auch als Klebschicht zur Anbindung des Separators in der Elektroden-/Separator-Anordnung. Wie aus der Figur 7 hervorgeht, kann die PVDF-Schicht 25 kontinuierlich auf die Kathoden-Endlosbahn K aufgetragen werden, etwa in einem Schmelztauchprozess. Alternativ dazu kann gemäß der Figur 8 die PVDF-Schicht 25 diskontinuierlich, zum Beispiel in einem Drehsprühprozess, aufgetragen werden.

In der Figur 9 ist ein beispielhafter PVDF-Beschichtungsprozess als Trockenprozess realisiert. Demnach wird die Kathoden-Endlosbahn K zusammen mit PVDF-Pulver 27 durch den Walzenspalt eines ersten Kalanderwalzenpaars 29 und eines zweiten Kalanderwalzenpaars 31 geführt. Im ersten Kalanderwalzenpaar 29 wird das PVDF-Pulver 27 bei Raumtemperatur mit der Kathoden-Endlosbahn K verpresst. Im zweiten Kalanderwalzenpaar 31 wird die vorgepresste PVDF-Schicht bei 120°C nachgepresst. Im weiteren Prozessverlauf durchläuft die Kathoden-Endlosbahn K eine Trocknungseinrichtung 33, in der die PVDF-Schicht 25 aufgeschmolzen wird. Die Trocknungseinrichtung 33 weist beispielhaft Infrarottrockner 34 auf, während Saugeinrichtungen 35 eine Gasabsaugung aus dem Trockenraum vornehmen.

Stromab der Trocknungseinrichtung 33 folgt in der Figur 9 ein Kühlwalzenpaar 36, durch dessen Walzenspalt die Kathoden-Endlosbahn K bis zu einer Dickenmessung 37 und einer Oberflächenprüfung 39 geführt wird. Im Anschluss daran wird die Kathoden-Endlosbahn K auf einer Aufwickelrolle 41 aufgewickelt, die mit einer Querstreckrolle 43 zusammenwirkt, mittels der Falten aus der Kathoden-Endlosbahn K entfernt werden.

Im weiteren Prozessverlauf folgt ein Schneidprozess, in dem die Kathode aus der Kathoden-Endlosbahn K abgelängt und/oder zugeschnitten wird. Im Stapel- oder Wickelprozess wird die Kathode in einer Elektroden-/Separator-Anordnung integriert, die in das Zellgehäuse eingehaust wird. Danach folgt eine Formation/Aging, in der erste Lade-/Entladevorgänge in der Batteriezelle durchgeführt werden. Die Formation/Aging findet bei einer Prozesstemperatur weit oberhalb des Schmelzpunkts von Ethylencarbonat statt. Dadurch schmilzt das Ethylencarbonat unter Bildung einer hohen Porosität im Kathodenaktivmaterial auf.

Der Prozess zur Fertigung der Anode ist gemäß den Figuren 10 und 11 im Hinblick auf eine beschleunigte Elektrolyt-Benetzung wie folgt angepasst: Demnach wird ein Beschichtungsprozess durchgeführt, der in einem ersten Teilschritt und in einem zweiten Teilschritt aufgeteilt ist. Im ersten Teilschritt wird eine Ableiterfolien-Endlosbahn 22 (Figur 10) mit eine Anodenaktivmaterialschicht 45 als Basisschicht beschichtet. Das Anodenaktivmaterialschicht 45 weist Graphit mit einem Binder sowie mit leitfähigem Kohlenstoff auf. Anschließend folgt der zweite Teilschritt, in dem die Anodenaktivmaterialschicht 45 (Basisschicht) mit einer Hartkohlenstoffschicht 47 beschichtet wird. In der Hartkohlenstoffschicht 47 sind Aluminiumoxid-Partikel 49 eingebettet. Die Hartkohlenstoffschicht 47 weist eine Vielzahl zufällig verteilter Poren auf, wodurch der Benetzungsprozess (Figur 11) beschleunigt wird. Die Aluminiumoxid-Partikel 49 bieten einen Schutz vor Dendritenwachstum.

Im Anschluss daran findet gegebenenfalls ein Trockenprozess sowie ein Kalandrierprozess statt. Danach wird der erfindungsgemäße Benetzungsprozess durchgeführt. Hierzu wird die Anoden-Endlosbahn A einer in der Figur 11 gezeigten Anoden-Benetzungsstation 51 zugeführt, die identisch wie die Separator-Benetzungsstation 3 (Figur 1) oder die Kathoden-Benetzungsstation 21 (Figur 6) aufgebaut ist, so dass auf deren Vorbeschreibung verwiesen wird. Im Unterschied zur Separator-Benetzungsstation 3 liegt die Prozesstemperatur im Benetzungsprozess der Anoden-Endlosbahn A (Figur 11) bei einer Prozesstemperatur von zum Beispiel 50°C bis 70°C, um den Benetzungsprozess weiter zu beschleunigen. Am Ausgang des Elektrolytbads 5 wird die Anoden-Endlosbahn A durch den Walzenspalt des Transferrollenpaars 10 in Richtung Stapel-/oder Wickelprozess geführt. Vorher erfolgt noch ein nicht gezeigter Schneidprozess, in dem die Anode aus der Anoden-Endlosbahn A abgelängt und/oder zugeschnitten wird. Im Stapel- oder Wickelprozess wird die Anode in einer Elektroden-/Separator-Anordnung integriert, die in das Zellgehäuse eingehaust wird. Danach folgt eine Formation/Aging, in der erste Lade-/Entladevorgänge in der Batteriezelle durchgeführt werden.

### Bezugszeichenliste

- 2: Wickelrolle
- 3: Separator-Benetzungsstation
- 4: Reinigungseinheit
- 5: Elektrolytbad
- 7: Umlenkrollen-Anordnung
- 8: Spannrollen
- 9: Benetzungswalzenpaar
- 10: Transferrollen
- 11: Oberflächenstruktur
- 13: Abstreiferwalzenpaar
- 15: Piezowandler
- 17: Mischereinheit
- 19: Reservoir
- 21: Kathoden-Endlosbahn
- 22: Ableiterfolien-Endlosbahn
- 23: Kathodenaktivmaterialschicht
- 25: PVDF-Schicht
- 27: PVDF-Pulver
- 29: erstes Kalanderwalzenpaar
- 31: zweites Kalanderwalzenpaar
- 33: Trockeneinrichtung
- 34: Infrarottrockner
- 35: Saugeinheiten
- 36: Kühlwalzenpaar
- 37: Dickenmessung
- 39: Oberflächenprüfung
- 41: Aufwickelrolle
- 43: Querstreckrolle
- 45: Anodenaktivmaterialschicht
- 47: Hartkohlenstoffschicht
- 49: Aluminiumoxid-Partikel
- 51: Anoden-Beschichtungsstation
- S: Separator-Endlosbahn
- A: Anoden-Endlosbahn
- K: Kathoden-Endlosbahn
- E: Elektrolyt

## Patentansprüche

1. Verfahren zur Fertigung einer Batteriezelle mit einer im Zellgehäuse angeordneten Elektroden-/Separator-Anordnung mit zumindest einem Separator, einer Anode und einer Kathode, die mit Elektrolyt (E) benetzt sind, mit einem Stapel- oder Wickelprozess, in dem der Separator, die Anode und die Kathode zur Elektroden-/Separatoranordnung zusammengelegt werden, **dadurch gekennzeichnet, dass** der Separator, die Anode und/oder die Kathode in einem Benetzungsprozess bereits vor dem Stapel- oder Wickelprozess mit dem Elektrolyt (E) benetzt werden, so dass insbesondere die nach einer Elektrolyt-Befüllung in das Zellgehäuse beginnende Benetzungszeitdauer zur Elektrolyt-Benetzung des Separators, der Anode und/oder der Kathode zumindest reduzierbar ist oder wegfällt.

2. Verfahren nach Anspruch 1, **dadurch gekennzeichnet, dass** der Separator, die Anode und/oder die Kathode jeweils als Endlosbahn (S, K, A) bereitgestellt werden, die im Benetzungsprozess durch ein Elektrolytbad (5) geführt wird, und dass insbesondere im Elektrolytbad (5) ein Benetzungswalzenpaar (9) angeordnet ist, durch dessen Walzenspalt die Endlosbahn (S, K, A) läuft, und dass insbesondere das Benetzungswalzenpaar (9) im Walzenspalt einen mechanischen Druck auf die Endlosbahn (S, K, A) ausübt, um einen Elektrolyt-Eintritt in die Poren der Endlosbahn (S, K, A) zu unterstützen, und/oder dass die Benetzungswalzen am Außenumfang eine Oberflächenstruktur (11) aufweisen, mittels der zur Steigerung der Elektrolyt-Aufnahme Mikrovertiefungen in der Endlosbahn (S, K, A) erzeugt werden.

3. Verfahren nach Anspruch 2, **dadurch gekennzeichnet, dass** insbesondere in Fertigungsrichtung stromab des Benetzungswalzenpaars (9) ein Abstreiferwalzenpaar (13) bereitgestellt ist, das oberhalb des Elektrolyt-Pegels im Elektrolytbad (5) angeordnet ist und durch dessen Walzenspalt die Endlosbahn (S, K, A) in Richtung Ausgang des Elektrolytbads (5) läuft, wodurch überschüssiger Elektrolyt (E) von der Endlosbahn (S, K, A) abgestreift wird sowie insbesondere unter Schwerkraftwirkung in das Elektrolytbad (5) zurückläuft, und/oder dass die Benetzungswalzen und/oder die Abstreiferwalzen insbesondere mittels eines Piezowandlers (15) in Vibration versetzbar sind, und dass insbesondere die Vibration der Benetzungswalzen derart eingestellt ist, dass eine Elektrolyt-Aufnahme der Endlosbahn (S, K, A) unterstürzt wird, oder dass insbesondere die Vibration der Abstreiferwalzen derart eingestellt ist, das ein Elektrolyt-Abstreifen von der Endlosbahn (S, K, A) unterstützt wird.

4. Verfahren nach einem der vorhergehenden Ansprüche, **dadurch gekennzeichnet, dass** zur Durchführung eines Stapelprozesses eine Schneidstation bereitgestellt ist, in der die Endlosbahnen (S, K, A) zu Elektrodenblätter und Separatorblätter zugeschnitten werden, und dass die Elektrodenblätter und/oder Separatorblätter im Benetzungsprozess jeweils durch ein Elektrolytbad (5) geführt werden.

5. Verfahren nach einem der vorhergehenden Ansprüche, **dadurch gekennzeichnet, dass** nach dem Benetzungsprozess sowie vor dem Stapel- oder Wickelprozess der Separator mit einer PVDF-Schicht beschichtet wird, um ein Abtropfen des Elektrolyts (E) aus dem Separator zu unterbinden und/oder um eine Haftung mit der Elektrode zu gewährleisten, und dass insbesondere die PVDF-Beschichtung des Separators durch Rotationsspritzen oder durch Auftragen von PVDF-Partikeln auf den Separator erfolgt, und anschließend die auf den Separator aufgetragenen PVDF-Partikel mittels Druckwalzen auf der Separatoroberfläche verdichtet werden.

6. Verfahren nach einem der vorhergehenden Ansprüche, **dadurch gekennzeichnet, dass** das Verfahren die folgende Prozessabfolge aufweist:
- Beschichtungsprozess, in dem eine Ableiter-Endlosbahn (22) insbesondere mit einem zähflüssigen Ausgangsmaterial eines Kathodenaktivmaterials (23) beschichtet wird, und zwar unter Bildung einer Kathoden-Endlosbahn (K), wobei dem Kathodenaktivmaterial (23) als Elektrolyt-Komponente insbesondere Ethylencarbonat-Feststoffpartikel beigemischt ist, sowie insbesondere PVDF als Binder, CNT für die Leitfähigkeit und NMP als Lösungsmittel beigemischt ist, und wobei der Beschichtungsprozess bei einer Prozesstemperatur (ca. -7°C) unterhalb des Erstarrungspunkts von Ethylencarbonat erfolgt;
- insbesondere Trockenprozess zum Trocknen der Kathoden-Endlosbahn (K), wobei die Kathoden-Endlosbahn (K) bis auf etwa 120°C erwärmt wird, wodurch die Ethylencarbonat-Feststoffpartikel aufschmelzen, wobei insbesondere nach dem Trockenprozess die Kathoden-Endlosbahn (K) abermals auf eine Prozesstemperatur (ca. -10°C) unterhalb des Erstarrungspunktes von Ethylencarbonat abgekühlt wird;
- Kalandrierprozess, in dem die Kathodenaktivmaterialschicht (23) auf eine vordefinierte Schichtdicke verdichtet wird;
- Benetzungsprozess im Elektrolytbad (5), und zwar bei einer Prozesstemperatur (ca. Raumtemperatur) unterhalb des Schmelzpunkts von Ethylencarbonat, so dass das Ethylencarbonat in fester Phase in den Poren des Kathodenaktivmaterials (23) gehalten wird;
- insbesondere PVDF-Beschichtungsprozess, bei dem die Kathodenaktivmaterialschicht (23) mit einer PVDF-Schicht (25) überzogen wird, wobei insbesondere die PVDF-Schicht (25) als Schutzschicht und als Klebschicht zur Anbindung des Separators wirkt;
- Stapel- oder Wickelprozess zur Bildung der Elektroden-/Separator-Anordnung sowie Einhausung der Elektroden-/Separator-Anordnung in dem Zellgehäuse; und
- Formation/Aging zur Durchführung erster Lade-/Entladevorgänge in der Batteriezelle, wobei die Formation/Aging bei einer Prozesstemperatur oberhalb des Schmelzpunkts von Ethylencarbonat erfolgt, so dass das Ethylencarbonat unter Bildung einer hohen Porosität im Kathodenaktivmaterial (23) aufschmilzt.

7. Verfahren nach Anspruch 6, **dadurch gekennzeichnet, dass** für den Fall, dass das im Beschichtungsprozess dem Kathodenaktivmaterial (23) beigemischte Ethylencarbonat während des Trockenprozesses teilweise aus der Kathodenaktivmaterialschicht (23) verdampft, die folgende Maßnahme nach dem Benetzungsprozess durchführbar ist:
- PVDF-Beschichtungsprozess, bei dem die Kathodenaktivmaterialschicht (23) mit einer PVDF-Schicht (25) überzogen wird, in die Ethylencarbonat-Partikel eingebettet sind, wobei insbesondere die PVDF-Schicht (25) als Klebschicht zur Anbindung des Separators wirkt, und/oder die PVDF-Schicht (25) ein Abtropfen von Elektrolyt (E) aus den Poren der Kathodenaktivmaterialschicht (23) unterbindet, und/oder dass insbesondere das in die PVDF-Schicht (25) eingebettete Ethylenkarbonat während des Aging-Prozesses (zum Beispiel bei etwa 60°C) aufschmilzt und die Poren der Kathodenaktivmaterialschicht (23) füllt, so dass bevorzugt die in der PVDF-Schicht (25) eingebetteten Ethylencarbonat-Partikel für eine gleichmäßige Durchtränkung dieser Poren mit Elektrolyt (E) gewährleisten.

8. Verfahren nach Anspruch 6 oder 7, **dadurch gekennzeichnet, dass** der Beschichtungsprozess zu Herstellung der Kathoden-Endlosbahn (K) ein Trockenbeschichtungsprozess ist, bei dem der pulverförmigen Ausgangskomponente des Kathodenaktivmaterials (23) Ethylencarbonat beigemischt wird, und/oder dass zusätzlich die Kathoden-Endlosbahn (K) nach dem Benetzungsprozess mit PVDF beschichtbar ist, damit Ethylencarbonat und der Elektrolyt (E) aus dem Elektrolytbad (5) im weiterem Prozessverlauf nicht aus den Elektrodenporen tropfen.

9. Verfahren nach Anspruch 6 bis 8, **dadurch gekennzeichnet, dass** der PVDF-Beschichtungsprozess als Trockenprozess realisierbar ist, bei dem die Kathoden-Endlosbahn (K) zusammen mit PVDF-Pulver (25) durch den Walzenspalt zumindest eines Kalanderwalzenpaars (29, 31) geführt wird, und zwar unter Bildung der PVDF-Schicht (25).

10. Verfahren nach einem der vorhergehenden Ansprüche, **dadurch gekennzeichnet, dass** das Verfahren die folgende Prozessabfolge aufweist:
- Beschichtungsprozess mit einem ersten Teilschritt, in dem eine Ableiter-Endlosbahn (22) mit einer Anodenaktivmaterialschicht (45) als Basisschicht aus Graphit mit Binder und leitfähigem Kohlenstoff beschichtet wird, und einem zweiten Teilschritt, in dem die Basisschicht (45) mit einer Hartkohlenstoffschicht (47) beschichtet wird, in der bevorzugt Aluminiumoxid-Partikel (49) eingebettet sind, wobei insbesondere die Hartkohlenstoffschicht (47) eine Vielzahl zufällig verteilter Poren bereitstellt, was den Benetzungsprozess beschleunigt, und die Aluminiumoxid-Partikel (49) einen Schutz vor Dendriten-Wachstum bieten;
- insbesondere Trockenprozess zum Trocknen der Anoden-Endlosbahn (A);
- insbesondere Kalandrierprozess, in dem die Anodenaktivmaterialschicht (45) auf eine vordefinierte Schichtdicke verdichtet wird;
- Benetzungsprozess im Elektrolytbad (5);
- Schneidprozess, in dem die Anoden-Endlosbahn (A) zur Anode abgelängt und/oder zugeschnitten wird;
- Stapel- oder Wickelprozess zur Bildung der Elektroden-/Separator-Anordnung sowie Einhausung der Elektroden-/Separator-Anordnung in dem Zellgehäuse;
- insbesondere Formation/Aging zur Durchführung erster Lade-/Entladevorgänge in der Batteriezelle.
